# EUROPÄISCHE PATENTANMELDUNG

(11) **EP 4 498 048 A1**
(43) Veröffentlichungstag der Anmeldung: **29.01.2025**
(21) Anmeldenummer: 23187828.1
(22) Anmeldetag: 26.07.2023
(51) Int. Cl.: G01H 5/00, G01N 29/024

(54) **MESSVORRICHTUNG FÜR SCHALLGESCHWINDIGKEIT IN STOFFPROBEN, MESSVERFAHREN, COMPUTERPROGRAMMPRODUKT, AUSWERTUNGSEINHEIT UND SIMULATIONSPROGRAMMPRODUKT**

(71) Anmelder: Siemens Aktiengesellschaft, 80333 München (DE)
(72) Erfinder: Heffels, Camiel, 76297 Stutensee-Büchig (DE); Steinbacher, Franz, 76137 Karlsruhe (DE)
(74) Vertreter: Siemens Patent Attorneys

(57) **Zusammenfassung**

Die Erfindung betrifft eine Messvorrichtung (10), die zu einem Erfassen einer Schallgeschwindigkeit (35) in einer Stoffprobe (25) dient. Die Messvorrichtung (10) umfasst eine Messkammer (12) mit einem Schallemitter (18) und eine Mehrzahl an Mikrofonen (20), die parallel zu einer Hauptachse (15) der Messkammer (12) zueinander beabstandet angeordnet sind. Die Mikrofone (20) dienen zu einem selektiven Erfassen einer Frequenz (32) einer stehenden Welle (30). Die Erfindung betrifft ebenso ein Verfahren (100) zum Messen einer Schallgeschwindigkeit (35) in einer Stoffprobe (25) mit einer entsprechenden Messvorrichtung (10). Gleichermaßen betrifft die Erfindung ein entsprechend ausgebildetes Computerprogrammprodukt (50), mit dem ein solches Verfahren (100) durchführbar ist. Weiter betrifft die Erfindung eine Auswertungseinheit (40), die mit einem korrespondierenden Computerprogrammprodukt (50) ausgestattet ist. Ferner betrifft die Erfindung ein Simulationsprogrammprodukt (60) zum Simulieren eines Betriebsverhaltens einer entsprechenden Messvorrichtung (10).

## Beschreibung

Die Erfindung betrifft eine Messvorrichtung zum Erfassen einer Schallgeschwindigkeit in einer Stoffprobe. Die Erfindung betrifft ebenso ein Verfahren zum Messen einer Schallgeschwindigkeit in einer Stoffprobe. Weiter betrifft die Erfindung ein entsprechendes Computerprogrammprodukt und eine korrespondierende Auswertungseinheit. Darüber hinaus betrifft die Erfindung ein Simulationsprogrammprodukt zum Simulieren eines Betriebsverhaltens einer solchen Messvorrichtung.

Aus dem Handbuch "Technical Information - Model GD402 Gas Density Meter", Dokumentenkürzel TI 11T03E01-01E der Yokogawa Electric Corporation ist ein Gasdichtemessgerät bekannt, das auf einer Messung einer Resonanzfrequenz in einer gasförmigen Stoffprobe beruht. Das Gasdichtemessgerät umfasst einen dünnwandigen Zylinder, der von einem massiven Zylinderkörper umgeben ist. Zwischen dem dünnwandigen Zylinder und dem massiven Zylinderkörper ist ein Spalt ausgebildet, der von der Stoffprobe überströmt wird. Mittels zwei Paaren an Piezo-Elementen wird eine Vibration des dünnwandigen Zylinders erfasst.

Die bisher unveröffentlichte Europäische Patentanmeldung mit der Anmeldenummer 23170557.5 zeigt eine Messvorrichtung zum Messen einer Schallgeschwindigkeit in einer Stoffprobe, die eine Messkammer durchströmt. An einer Wandung der Messkammer ist in einem mittleren Bereich ein Mikrofon angeordnet, mit dem ein mittiger Wellenbauch einer harmonischen Schwingung erfasst wird. Die Messvorrichtung wird in einem Elektrolyseur eingesetzt.

Schallgeschwindigkeitsmessungen in Stoffproben werden zunehmend zur Überwachung von technischen Prozessen, wie beispielsweise einem Betrieb eines Elektrolyseurs, eingesetzt. Hierzu wird eine erhöhte Messgenauigkeit und eine gesteigerte Robustheit gefordert. Ebenso besteht die Zielsetzung, entsprechend geeignete Messvorrichtungen einfach und wirtschaftlich herzustellen. Der Erfindung liegt die Aufgabe zugrunde, eine Möglichkeit bereitzustellen, die in zumindest einem der skizzierten Punkte eine Verbesserung bietet.

Die Aufgabenstellung wird durch eine erfindungsgemäße Messvorrichtung gelöst. Die Messvorrichtung ist zu einem Erfassen einer Schallgeschwindigkeit in einer Stoffprobe, beispielsweise eines Gasgemischs, ausgebildet. Die Messvorrichtung umfasst eine Messkammer, in der die Stoffprobe während eines Messbetriebs zumindest vorübergehend aufgenommen ist. Die Messkammer ist mit einem Schallemitter versehen, der dazu ausgebildet und angeordnet ist, eine akustische Schwingung in der Stoffprobe hervorzurufen. Insbesondere ist der Schallemitter dazu ausgebildet, als akustische Schwingung eine stehende Welle in der Stoffprobe hervorzurufen. Dazu kann der Schallemitter beispielsweise durchstimmbar angesteuert werden.

Erfindungsgemäß ist parallel zu einer Hauptachse der Messkammer zueinander eine Mehrzahl an Mikrofonen angeordnet. Die Mikrofone sind zu einem selektiven Erfassen einer Schwingungsmode der stehenden Welle zu erfassen, also von Amplituden, die sich bei der entsprechenden Schwingungsmode einstellen. Die Hauptachse der Messkammer entspricht hierbei einer Achse, entlang der durch den Schallemitter akustische Anregungen aussendbar ist. Insbesondere kann die Hauptachse einer Richtung einer maximalen Innenabmessung der Messkammer entsprechen. Durch die beanstandete Anordnung der Mikrofone parallel zu Hauptachse sind gezielt Positionen akustisch erfassbar, in denen bei einer bestimmten Schwingungsmode der stehenden Welle mit einer erhöhten, insbesondere maximalen, Amplitude eines dort vorliegenden Schalldrucks zu rechnen ist. Die Schwingungsmode wiederum hängt von der vorliegenden Frequenz ab. Dadurch ist gezielt, also selektiv, eine stehende Welle, die bei einer bestimmten Schwingungsmode vorliegt, in der Messkammer erfassbar. Hieraus wiederum ist eine Wellenlänge der stehenden Welle ermittelbar. Störeinflüsse von anderen akustischen Schwingungen in der Messkammer, insbesondere infolge anderer Schwingungsmoden, sind in der beschriebenen Messvorrichtung unterdrückbar. Die erfindungsgemäße Messvorrichtung erlaubt somit eine robuste und gleichzeitig präzise Messung. Basierend auf der Messung der Schallgeschwindigkeit in der Stoffprobe ist unter anderem deren Zusammensetzung ermittelbar. Bei einer binären Stoffprobe, also einer Stoffprobe mit zwei Komponenten, ist auch deren Mischverhältnis ermittelbar. Die selektiv zu erfassende Schwingungsmode kann durch die Positionierung der Mikrofone konstruktiv vorgegeben sein.

In einer Ausführungsform der Messvorrichtung ist zumindest eines der Mikrofone über die Auswertungseinheit mit dem Schallemitter verbunden. Der Schallemitter und das zumindest eine der Mikrofone sind hierbei in einem positiven Rückkopplungskreis angeordnet. Hierdurch ist bei einem Messbetrieb die zu erfassende Schwingungsmode präzise auswählbar. Zusammen mit der Positionierung der Mikrofone liegt für eine ausgewählte Schwingungsmode eine eindeutige Wellenlänge vor. Hierdurch wiederum ist die Schallgeschwindigkeit in der Stoffprobe genau messbar. Ferner können alle Mikrofone der beanspruchten Messvorrichtung in einem positiven Rückkopplungskreis mit dem Schallemitter angeordnet sein. Hierdurch werden die oben skizzierten Vorteile in besonderem Umfang erzielt.

In einer weiteren Ausführungsform der beanspruchten Messvorrichtung sind die Mikrofone mit der Auswertungseinheit verbunden. Die Auswertungseinheit ist dazu ausgebildet, eine Kombination von Messsignalen der Mikrofone auszuwerten, beispielsweise eine Addition von Messsignalen. Die Mikrofone können dazu mit einer Additionseinheit verbunden sein, die Messsignale der verbundenen Mikrofone zu addieren und basierend hierauf ein Kombinationssignal zu bilden, das als Summensignal ausgebildet ist. Wellenbäuche von stehenden Wellen bestimmter Frequenz bzw. Schwingungsmoden treten in der Messkammer, bezogen auf deren Hauptachse, an festen Positionen auf. Die Mikrofone können derart angeordnet sein, dass mehrere Mikrofone maximale Amplituden entlang der stehenden Welle erfassen. Ein aus entsprechenden Messsignalen durch Addition gebildetes Kombinationssignal weist dadurch ebenso eine erhöhte Amplitude auf. Hierdurch wird das Signal-Rauschen-Verhältnis, auch SNR genannt, erhöht, was eine robuste Messung erlaubt. Dementsprechend ist die beanspruchte Messvorrichtung mit einfachen Mikrofonen, insbesondere MEMS-Mikrofonen, herstellbar und bietet gleichzeitig eine zuverlässige Auswahl, also Selektion, einer Schwingungsmode.

Des Weiteren kann die Auswertungseinheit einen Operationsverstärker aufweisen. Der Operationsverstärker ist derart mittelbar oder unmittelbar mit den Mikrofonen verbunden, dass die Messsignale der Mikrofone kombiniert zu einem Verstärkereingang des Operationsverstärkers geführt werden. Eine dazu geeignete Schaltung kann Signalleitungen der Mikrofone in einem Knoten miteinander verbinden. Die Messsignale sind hardware-gestützt miteinander kombinierbar, also addierbar, was eine schnelle und zuverlässige Bereitstellung des Kombinationssignals, insbesondere des Summensignals, gewährleistet.

In einer weiteren Ausführungsform der beanspruchten Messvorrichtung sind die Mikrofone zu einem kombinierten, also im Wesentlichen gleichzeitigen, Erfassen von Druckbäuchen parallel zur Hauptachse der Messkammer angeordnet. An den Druckbäuchen der stehenden Welle treten periodisch Maxima des Schalldrucks der stehenden Welle auf. Die Druckbäuche sind voneinander gleichmäßig beabstandet. Die entsprechenden Mikrofone können somit auch gleichmäßig voneinander beabstandet angeordnet sein, insbesondere jeweils im Bereich eines zu erwartenden Druckbauchs. Mikrofone sind mit einer erhöhten Präzision an bzw. in der Messkammer positionierbar. Je präziser die Mikrofone positioniert sind, umso höher ist ein erzielbares Signalmaximum des Kombinationssignals, was wiederum eine trennscharfe Selektion der entsprechenden Schwingungsmode erlaubt, und infolgedessen auch eine präzise Ermittlung der Schallgeschwindigkeit in der Stoffprobe.

Darüber hinaus kann die Messvorrichtung eine erste Gruppe an Mikrofonen zu einem selektiven Erfassen einer Frequenz einer ersten stehenden Welle und eine zweite Gruppe von Mikrofonen zu einem selektiven Erfassen einer Frequenz einer zweiten stehenden Welle umfassen, die an der Messkammer angeordnet sind. Die erste und zweite Gruppe können teilweise identische Mikrofone umfassen, insbesondere ein entlang der Hauptachse der Messkammer im Wesentlichen mittig angeordnetes Mikrofon. Mittels entsprechender Mikrofone ist eine Mehrzahl von stehenden Wellen in der Messkammer erfassbar. Bei geeignetem Ansteuern, also Durchstimmen, des Schallemitters, ist die Schallgeschwindigkeit in der Stoffprobe in der Messkammer mehrfach erfassbar. Folglich ist eine Erfassung der Schallgeschwindigkeit mittels der ersten Gruppe an Mikrofonen durch eine Erfassung mittels der zweiten Gruppe an Mikrofonen plausibilisierbar. Es kann auch eine dritte, vierte, usw. Gruppe an Mikrofonen an der Messkammer zum Erfassen einer dritten, vierten usw. stehenden Welle in der Stoffprobe vorgesehen sein. Die Messkammer ist dadurch zum Betrieb mit einer Mehrzahl an Stoffproben anpassbar. Die Anzahl an möglichen Stoffproben ist hierbei lediglich durch den an bzw. in der Messkammer verfügbaren Bauraum beschränkt. Die beanspruchte Messvorrichtung ist folglich in puncto Vielseitigkeit skalierbar und ist somit auch für komplexe Einsatzzwecke geeignet. Die beanspruchte Messvorrichtung ist in besonderer Weise dazu geeignet, eine veränderliche Konzentration an Wasserstoff in einem schwereren Gas zu erkennen. Des Weiteren können die erste und zweite Gruppe an Mikrofonen derart angeordnet sein, dass diese benachbarte Wellenbäuche der stehenden Welle erfassen, die unterschiedliche Vorzeichen aufweisen. Ein Mikrofon der zweiten Gruppe ist folglich entlang der Hauptachse zwischen zwei Mikrofonen der ersten Gruppe positioniert. Die erste und zweite Gruppe an Mikrofonen können insbesondere an gegenüberliegenden Wandungen der Messkammer angeordnet sein.

Hierdurch ist die Verstärkung des Kombinationssignals weiter steigerbar. Insbesondere ist dadurch ein weiter gesteigertes SNR erzielbar.

Ferner kann die Auswertungseinheit, die zur Messvorrichtung gehört, frei von einem elektronischen Bandpassfilter ausgebildet sein. Insbesondere kann das Kombinationssignal im Wesentlichen ungefiltert an einen Phasenschieber gesendet werden. Der Phasenschieber gehört zur Auswertungseinheit und ist dazu ausgebildet, die Phase des Kombinationssignals derart zu verschieben, dass eine Mitkopplung, also eine positive Rücckopplung, entsteht. Dementsprechend kann das Kombinationssignal eine breite Spanne an Frequenzen aufweisen, die zum Ermitteln der Schallgeschwindigkeit auswertbar sind. Dadurch, dass der elektronisch Bandpassfilter entbehrlich ist, wird der Aufbau der Messvorrichtung weiter vereinfacht und erlaubt eine Messung der Schallgeschwindigkeit in einem breiten Messbereich. Dadurch ist die beanspruchte Messvorrichtung dazu geeignet, Stoffproben zu vermessen, die Wasserstoff aufweisen.

In einer weiteren Ausführungsform der beanspruchten Messvorrichtung sind die Mikrofone, bezogen auf die Hauptachse der Messkammer, an der gleichen Umfangsposition angeordnet. Folglich liegen die Mikrofone in einem Querschnitt betrachtet an der gleichen Position, also der gleichen Umfangsposition. Hierdurch ist gewährleistet, dass entlang der Hauptachse hintereinanderliegende Wellenbäuche gleichzeitig die Mikrofone erreichen und so gleichzeitig erfasst werden. Hierdurch ist eine weitere zeitliche Koordinierung der Messsignale von den Mikrofonen untereinander entbehrlich. Darüber hinaus ist eine Mehrzahl an Mikrofonen, vorzugsweise alle Mikrofone, auf einer gemeinsamen elektronischen Flachbaugruppe montierbar, beispielsweise einer länglichen Leiterplatte. Eine derartige Flachbaugruppe ist mit einem erhöhten Grad an Automatisierung schnell und kosteneffizient herstellbar.

Des Weiteren kann die stehende Welle, deren Frequenz zu erfassen ist, eine dritte oder vierte harmonische Longitudinalschwingung in der Messkammer sein. Die dritte und vierte harmonische Longitudinalschwingung zeigen jeweils signifikante Änderungen ihrer entsprechenden Resonanzfrequenz bei bereits geringen Änderungen der Zusammensetzung der zugrundeliegenden Stoffprobe. Die Änderung der Resonanzfrequenz korrespondiert hierbei mit einer Änderung der zu messenden Schallgeschwindigkeit in der Stoffprobe. Die dritte und vierte harmonische Longitudinalschwingung sind jeweils in vorteilhafter Weise dazu geeignet, eine Reinheit der vorliegenden Stoffprobe zu überwachen. Durch die signifikanten Änderungen der zugehörigen Resonanzfrequenz, die mit der beanspruchten Messvorrichtung erfassbar bzw. ermittelbar ist, genügen hierzu kosteneffiziente Mikrofone, beispielsweise solche aus der Unterhaltungselektronik. Die beanspruchte Messvorrichtung ist dadurch selbst ebenfalls kosteneffizient herstellbar.

Ferner kann im Bereich zumindest eines Mikrofons ein Temperatursensor und/oder ein Drucksensor angeordnet sein. Der Temperatursensor bzw. der Drucksensor sind dabei zu einem Erfassen einer in der Stoffprobe in der Messkammer vorliegenden Temperatur bzw. eines vorliegenden Drucks angeordnet und ausgebildet. Die Erfassung der Schallgeschwindigkeit in der Stoffprobe ist temperaturabhängig und druckabhängig. Mittels des Temperatursensors und/oder Drucksensors ist dadurch eine Temperaturkompensation und/oder Druckkompensation beim Messen der Schallgeschwindigkeit möglich. Die Genauigkeit der durchzuführenden Messung wird bei der beanspruchten Messvorrichtung hierdurch weiter gesteigert und dessen mögliches Einsatzspektrum für Prozessanwendungen erweitert.

In einer Ausführungsform der beanspruchten Messvorrichtung kann zumindest eines der Mikrofone als Druckmikrofon oder als Lasermikrofon ausgebildet sein. Druckmikrofone sind dazu ausgebildet, den Schalldruck, der sich im Bereich der Wellenbäuche der zu erfassenden stehenden Welle ergibt, unmittelbar zu erfassen. Druckmikrofone bieten eine erhöhte Robustheit und sind kosteneffizient. Ebenso kann eine Mehrzahl an Druckmikrofonen zu einem Mikrofon-Array verschaltet sein. Mit einem derartigen Mikrofon-Array sind gleichzeitig oder in einem Zeitscheiben-Betrieb eine Mehrzahl an Frequenzen stehender Wellen in der Messkammer selektiv erfassbar. Hierdurch ist die beanspruchte Messvorrichtung für eine breite Spanne an möglichen Einsatzzwecken anpassbar, beispielsweise für den Betrieb mit unterschiedlichen Stoffproben.

Alternativ kann zumindest eines der Mikrofone als Lasermikrofon ausgebildet sein. Das Lasermikrofon kann zu einem Erfassen einer Vibration einer Wandung der Messkammer angeordnet sein. Das Lasermikrofon ist derart positioniert, dass damit ein Bereich der Wandung erfasst wird, in dem ein Wellenbauch einer vorgegebenen stehenden Welle zu erwarten ist. Lasermikrofone sind unempfindlich gegen Strömungseffekte in der Messkammer. Ferner bieten Lasermikrofone auch über erhöhte Distanzen hinreichende Messgenauigkeit. Dementsprechend ist das Lasermikrofon an bzw. in der Messkammer an einer Vielzahl an Positionen befestigbar. Dies wiederum bietet bei der Auslegung der Messkammer zusätzliche konstruktive Freiheit und ermöglicht beispielsweise, die beanspruchte Messvorrichtung zu miniaturisieren.

Weiter alternativ können mehrere Mikrofone kombiniert als Schallkamera ausgebildet sein. Mit der Schallkamera sind mehrere Positionen, an denen Wellenbäuche von stehenden Wellen in der Messkammer auftreten können, gleichzeitig erfassbar. Die Schallkamera ist ohne weitergehende Umbauten an eine Vielzahl an zu erfassenden stehenden Wellen unterschiedlicher Wellenlänge bzw. Frequenzen anpassbar. Insbesondere ist die beanspruchte Messvorrichtung durch entsprechendes Parametrieren eines Computerprogrammprodukts, mit dem die Messvorrichtung betrieben wird, auf unterschiedliche stehende Wellen einstellbar. Die Addition der Messsignale kann hierbei ebenso durch durchgeführt werden, dass das Computerprogrammprodukt in geeigneter Weise ausgebildet ist. Die Messvorrichtung ist folglich in einfacher Weise durch Updates anpassbar. Mit steigender Rechenkapazität sind dadurch auch künftige Anwendungen mit zunehmender Komplexität umsetzbar. Des Weiteren kann das Mikrofon als optisches Mikrofon ausgebildet sein, das zu einem Messen einer Änderung eines Brechungsindex der Stoffprobe eingerichtet ist. Hierdurch sind Frequenzbereiche mit erhöhten Frequenzen erfassbar, insbesondere von einigen MHz, insbesondere vom im Wesentlichen 2 MHz. Dies erlaubt es, die Messkammer besonders kompakt auszubilden. Beispielsweise sind so Messkammern mit Innenmaßen von bis zu 20 mm entlang der Hauptachse umsetzbar. Mit einer derartigen Messkammer und einem solchen Mikrofon ist auch in flüssigen Stoffproben die vorliegende Schallgeschwindigkeit messbar.

Die zugrundeliegende Aufgabenstellung wird ebenso durch ein erfindungsgemäßes Verfahren gelöst. Das Verfahren dient zu einem Messen einer Schallgeschwindigkeit in einer Stoffprobe, die sich in einer Messkammer einer Messvorrichtung befindet. Die Stoffprobe kann in der Messkammer verbleiben. Alternativ kann die Messkammer von der Stoffprobe durchströmt sein. Das Verfahren umfasst einen ersten Schritt, in dem eine stehende Welle in der Stoffprobe erzeugt wird. Dies kann beispielsweise mittels eines Schallemitters erfolgen. Weiter wird im ersten Schritt eine Mehrzahl an Druckoszillationen erfasst und eine Mehrzahl an korrespondierenden Messsignalen ausgegeben. Die Druckoszillationen werden durch die stehende Welle hervorgerufen. Das Erfassen der Druckoszillationen kann beispielsweise mittels einer Mehrzahl an Mikrofonen erfolgen.

Darüber hinaus wird im erfindungsgemäßen Verfahren ein zweiter Schritt durchgeführt, in dem die Messsignale, die im ersten Schritt ausgegeben werden, zu einem Kombinationssignal addiert werden. Durch das Addieren der Messsignale werden deren vorliegende Amplituden addiert. Im zweiten Schritt wird ebenso eine Frequenz des Kombinationssignals ermittelt. Die Frequenz des Kombinationssignals stellt ein Maß für die zu messende Schallgeschwindigkeit in der Stoffprobe dar. Anhand der ermittelten Frequenz des Kombinationssignals wird weiter im zweiten Schritt die Schallgeschwindigkeit ermittelt, die in der Stoffprobe vorliegt.

Des Weiteren umfasst das erfindungsgemäße Verfahren einen dritten Schritt, in dem die im zweiten Schritt ermittelte Schallgeschwindigkeit an einen Benutzer und/oder eine Datenschnittstelle ausgegeben wird. Die Datenschnittstelle kann dazu ausgebildet sein, die Schallgeschwindigkeit an eine übergeordnete Steuereinheit zu übertragen, durch die eine Anlage gesteuert wird, in der die Messvorrichtung eingesetzt wird. Basierend hierauf wiederum kann in den Betrieb der Anlage eingegriffen werden. Die Anlage kann beispielsweise ein Elektrolyseur, eine chemische Anlage, insbesondere eine petrochemische Anlage, oder eine Energieerzeugungsanlage, insbesondere eine Gasturine, sein.

Das beanspruchte Verfahren erlaubt es, die Schallgeschwindigkeit in der Stoffprobe präzise, zuverlässig und robust zu ermitteln. Insbesondere kann die Messvorrichtung, an der das Verfahren durchgeführt wird, nach einer der oben skizzierten Ausführungsformen ausgebildet sein. Die Merkmale der Messvorrichtung sind deshalb ohne Weiteres einzeln oder in Kombination auf das beanspruchte Verfahren übertragbar.

Ebenso wird die oben beschriebene Aufgabe durch ein erfindungsgemäßes Computerprogrammprodukt gelöst. Das Computerprogrammprodukt ist dazu ausgebildet, Messsignale zu empfangen und zu verarbeiten, die von einer Mehrzahl an Mikrofonen gesendet werden. Das Computerprogrammprodukt ist erfindungsgemäß dazu ausgebildet, ein Verfahren gemäß zumindest einer der oben dargestellten Ausführungsformen durchzuführen. Das Computerprogrammprodukt kann insbesondere dazu ausgebildet sein, zumindest das Kombinationssignal auszuwerten und anhand dessen die Schallgeschwindigkeit in der Stoffprobe zu ermitteln. Weiter kann das Computerprogrammprodukt dazu ausgebildet sein, die beanspruchte Messvorrichtung bestimmungsgemäß zu betreiben. Das Computerprogrammprodukt kann monolithisch ausgebildet sein, also auf einer einzigen Hardwareplattform ausführbar sein. Alternativ kann das Computerprogrammprodukt modular ausgebildet sein und eine Mehrzahl an Teilprogrammen umfassen, die auf unterschiedlichen Hardwareplattformen ausführbar sind und im Betrieb über eine kommunikative Datenverbindung zusammenwirken. Das Computerprogrammprodukt kann ganz oder teilweise in Form von Software ausgebildet sein. Das Computerprogrammprodukt kann auch ganz oder teilweise festverdrahtet ausgebildet sein, beispielsweise als Chip, integrierte Schaltung oder als FPGA. Ebenso kann das Computerprogrammprodukt als eine Kombination aus einer festverdrahteten Ausführungsform und Software ausgebildet sein.

Ferner wird die eingangs skizzierte Aufgabenstellung durch eine erfindungsgemäße Auswertungseinheit gelöst. Die Auswertungseinheit ist zum Ermitteln einer Schallgeschwindigkeit in einer Stoffprobe ausgebildet. Weiter ist die Auswertungseinheit dazu ausgebildet, eine Frequenz eines Kombinationssignals auszuwerten, in dem eine Messsignale von einer Mehrzahl an Mikrofonen kombiniert sind. Die Auswertungseinheit umfasst eine Schaltung, die erfindungsgemäß dazu ausgebildet ist, die Messsignale, die von den Mikrofonen kommen, zu addieren. Das Kombinationssignal wird von der Auswertungseinheit somit durch Addieren der Messsignale gebildet. Die Auswertungseinheit kann dazu ausgebildet sein, eine Ausführungsform eines der oben skizzierten Verfahren durchzuführen. Die Auswertungseinheit kann als Teil der beanspruchten Messvorrichtung ausgebildet sein oder zumindest mit der Messvorrichtung koppelbar ausgebildet sein. Die Merkmale des beanspruchten Verfahrens und der zugrundeliegenden Messvorrichtung sind ohne Weiteres einzeln oder in Kombination auf die Auswertungseinheit übertragbar.

Gleichermaßen wird die oben dargelegte Aufgabe durch ein erfindungsgemäßes Simulationsprogrammprodukt gelöst, das zu einem Simulieren eines Betriebsverhaltens einer Messvorrichtung ausgebildet ist. Das Simulationsprogrammprodukt ist dazu ausgebildet, eine Mehrzahl an Schritten auszuführen. In einem ersten Schritt wird ein Datensatz bereitgestellt, der dazu geeignet ist, die Funktionsweise der zu simulierenden Messvorrichtung nachzustellen. Beispielsweise kann dem Simulationsprogrammprodukt hierzu ein digitales Abbild der zu simulierenden Messvorrichtung bereitgestellt werden. Des Weiteren ist das Simulationsprogrammprodukt dazu ausgebildet, einen zweiten Schritt durchzuführen, in dem zumindest ein Betriebsparameter vorgegeben wird, durch den das zu simulierende Betriebsverhalten charakterisiert ist. Der Betriebsparameter kann beispielweise eine Zusammensetzung der Stoffprobe sein, eine Temperatur der Stoffprobe, deren Druck und/oder eine Durchflussgeschwindigkeit durch die Messvorrichtung sein.

Ferner ist das Simulationsprogrammprodukt dazu ausgebildet, einen dritten Schritt durchzuführen, in dem ein Physik-Modul ausgeführt wird. Das Physik-Modul ist dazu ausgebildet, basierend auf dem Datensatz, der im ersten Schritt bereitgestellt wird, und dem Betriebsparameter, der im zweiten Schritt bereitgestellt wird, zumindest einen Leistungsparameter der Messvorrichtung zu ermitteln. Der Leistungsparameter kann jegliche Größe sein, durch die die Funktionsweise der simulierten Messvorrichtung näher beschrieben wird. Dies kann beispielweise das Auftreten einer stehenden Welle sein und/oder deren Erfassung durch die Mikrofone in der Messvorrichtung. Beim Ausführen des Physik-Moduls wird im dritten Schritt das Betriebsverhalten der Messvorrichtung nachgestellt und somit der Leistungsparameter ermittelt.

Das Simulationsprogrammprodukt ist ebenso dazu ausgebildet, einen vierten Schritt durchzuführen, in dem der zumindest eine Leistungsparameter, der im dritten Schritt ermittelt wird, an einen Benutzer und/oder eine Datenschnittstelle auszugeben. Über die Datenschnittstelle sind Simulationsresultate wie der Leistungsparameter an andere simulationsgerichtete Computerprogramme übertragbar. Erfindungsgemäß ist die Messvorrichtung, deren Betriebsverhalten mit dem Simulationsprogrammprodukt nachgestellt wird, gemäß einer der oben dargestellten Ausführungsformen ausgebildet.

Das von der Messvorrichtung umgesetzte Messprinzip basiert auf der Ausbildung stehender Wellen in der Messkammer, die im Wesentlichen größenunveränderlich ist. Die Messsignale, die ein Maß für die zu messende Schallgeschwindigkeit sind, werden durch das Addieren verstärkt und heben sich gegenüber der in der Messkammer vorliegenden akustischen Kulisse ab. Beim Nachstellen des Betriebsverhaltens sind akustische Störungen dementsprechend vernachlässigbar. Ein Mitsimulieren von akustischen Störungen in der Messkammer ist daher entbehrlich, wodurch die erforderliche Rechenleistung reduziert ist. Ebenso ist das Verhalten von harmonischen Schwingungen in einfacher Weise simulierbar. Insgesamt ist das Simulationsprogrammprodukt in puncto Echtzeitfähigkeit verbessert, wodurch eine betriebsbegleitende Überwachung eines solchen Messvorrichtung mit relativ einfacher Hardware möglich ist. Dies wiederum erlaubt es, bei Vorliegen eine Abweichung zwischen dem Simulationsprogrammprodukt und der zugrundeliegenden Messvorrichtung, die simuliert wird, schneller zu reagieren. Hierdurch ist ein sicherer Betrieb einer Anlage gewährleistet, in der die Messvorrichtung eingesetzt wird.

Das Simulationsprogrammprodukt kann als sogenannter Digitaler Zwilling der Messvorrichtung ausgebildet sein, wie beispielsweise in der Druckschrift US 2017/286572 A1 beschrieben. Der Offenbarungsgehalt von US 2017/286572 A1 wird durch Verweisung in die vorliegende Anmeldung miteinbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Figuren sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Messvorrichtung in einem Längsschnitt;
- FIG 2: schematisch eine zweite Ausführungsform der beanspruchten Messvorrichtung in einem Längsschnitt;
- FIG 3: schematisch eine dritte Ausführungsform der beanspruchten Messvorrichtung in einem Längsschnitt;
- FIG 4: schematisch eine vierte Ausführungsform der beanspruchten Messvorrichtung in einem Längsschnitt.

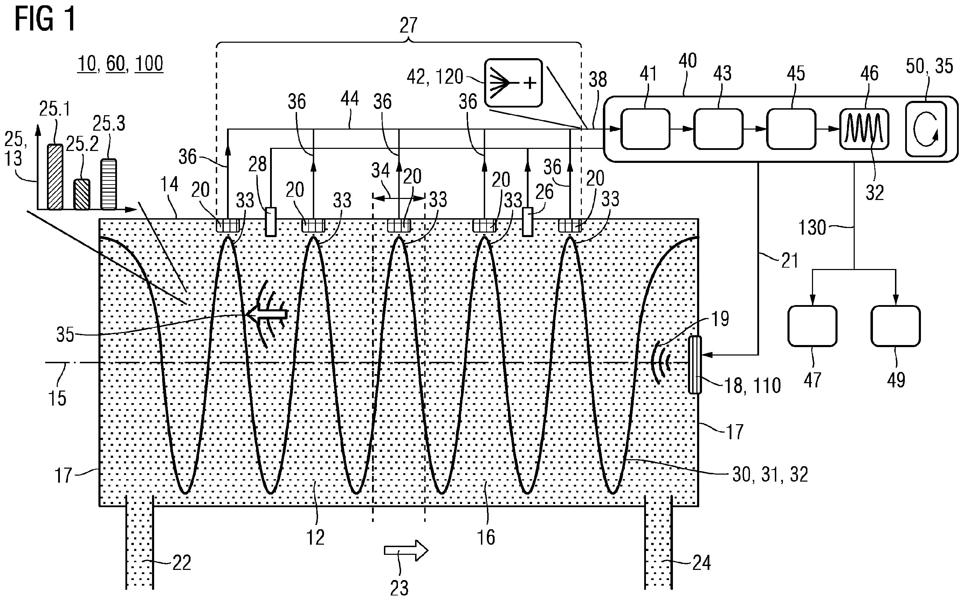

In FIG 1 ist schematisch eine erste Ausführungsform der beanspruchten Messvorrichtung 10 in einem Längsschnitt dargestellt, mit der eine Ausführungsform des beanspruchten Verfahren 100 zum Messen einer Schallgeschwindigkeit 35 durchgeführt wird. Die Messvorrichtung 10 umfasst eine Messkammer 12, die durch eine Wandung 14 begrenzt ist und dessen Innenraum 16 eine Stoffprobe 25 aufgenommen ist. Die Messkammer 12 erstreckt sich im Wesentlichen entlang einer Hauptachse 15 und ist durch gegenüberliegende Stirnflächen 17 verschlossen. Die Stoffprobe 25 ist ein Gasgemisch, das eine erste Komponente 25.1, eine zweite Komponente 25.2 und eine dritte Komponente 25.3 umfasst. Die Zusammensetzung 13 der Stoffprobe 25 ist in FIG 1 in einem Diagramm versinnbildlicht. Die Messkammer 12 umfasst weiter eine Zufuhrleitung 22 und eine Abfuhrleitung 24, so dass die Stoffprobe 25 die Messkammer 12 in einem Messbetrieb durchströmen kann. Dies ist in FIG 1 als Strömungsrichtung 23 gezeigt. An einer Stirnfläche 17 der Messkammer 12 ist ein Schallemitter 18 angeordnet, der dazu ausgebildet ist, eine vorgebbare Schallanregung 19 in der Stoffprobe 25 hervorzurufen. Der Schallemitter 21 ist durch Steuerbefehle 21 von einer Auswertungseinheit 40 ansteuerbar, so dass die Schallanregung 19 eine vorgebbare Frequenz aufweist. In Abhängigkeit von der Zusammensetzung 13 der Stoffprobe 25 stellt sich darin die zu messende Schallgeschwindigkeit 35 ein.

An einer Wandung 14 der Messkammer 12 ist eine Mehrzahl an Mikrofonen 20 angeordnet, die im Wesentlichen parallel zur Hauptachse 15 angeordnet sind und eine erste Gruppe 27 bilden. Zumindest eines der Mikrofone 20 ist als Druckmikrofon ausgebildet. Des Weiteren ist eines der Mikrofone 20 entlang der Hauptachse 15 im Wesentlichen mittig angeordnet. Die Mikrofone 20 sind untereinander im Wesentlichen gleich beabstandet positioniert. Die Mikrofone 20 sind jeweils in einem Bereich 34 angeordnet, in dem bei einer entsprechenden Schallanregung 19 ein Wellenbauch 33 einer stehenden Welle 30 auftritt. Die in FIG 1 gezeigte stehende Welle 30 entspricht einem Schalldruck 31, der sich infolge einer Longitudinalschwingung in der Messkammer einstellt. Weiter weist die stehende Welle 30 eine Frequenz 32 auf, über die die Schallgeschwindigkeit 35 in der Stoffprobe 25 zu messen ist. Durch die Anordnung der Mikrofone 20 ist gewährleistet, dass sie jeweils ein Messignal 36 mit erhöhter Amplitude erfassen. Die Mikrofone 20 sind über eine Schaltung 44 miteinander verbunden, die dazu ausgebildet ist, die Messsignale 36 von den Mikrofonen 20 zu addieren. Durch die Addition 42 der Messsignale 36 wird ein Kombinationssignal 38 gebildet, das eine entsprechend erhöhte Amplitude aufweist, wobei das Kombinationssignal 38 als Summensignal ausgebildet sein kann. Hierdurch weist das Kombinationssignal 38 ein erhöhtes Signal-Rauschen-Verhältnis, auch SNR genannt, auf. Die Auswertungseinheit 40 der Messvorrichtung 10 ist derart mit den Mikrofonen 20 verbunden, dass das Kombinationssignal 38 zugeführt wird.

Die Auswertungseinheit 40 umfasst einen Operationsverstärker 41, der dazu ausgebildet ist, das Kombinationssignal 38 zu verstärken und einem Phasenschieber 43 zuführt. Der Phasenschieber 43 wiederum ist dazu ausgebildet, eine Mitkopplung durchzuführen. Weiter ist der Phasenschieber 43 mit einer Amplitudenregelung 45 verbunden, wodurch die Amplitude des Kombinationssignals 38, das den Operationsverstärker 41 und den Phasenschieber 43 durchlaufen hat, für eine weitere Verarbeitung mit einem Zähler 46 angepasst wird. Der Zähler 46 ist mit einem nicht näher gezeigten Taktgeber, beispielsweise einer Uhr, gekoppelt und dazu ausgebildet, eine Frequenz des Kombinationssignals 38 zu erfassen. Die über den Zähler 46 erfasst Frequenz entspricht hierbei der Frequenz 32 der stehenden Welle 30 in der Messkammer 12. Weiter ist die Auswertungseinheit 40 mit einem Computerprogrammprodukt 50 versehen, das dazu geeignet ist, anhand der vom Zähler 46 erfassten Frequenz 32 die in der Stoffprobe 25 vorliegende Schallgeschwindigkeit 35 zu ermitteln.

Hierzu ist die Messkammer 12 ferner mit einem Temperatursensor 26 und einem Drucksensor 28 versehen, die mit der Auswertungseinheit 40 verbunden sind und die dazu ausgebildet und angeordnet sind, die in der Stoffprobe 25 vorliegende Temperatur und den Druck zu erfassen. Diese werden in Form von Messsignalen 36 ebenfalls an die Auswertungseinheit 40 übertragen. Basierend auf der Frequenz 32 ist somit eine temperatur- und druckkompensierte Ermittlung der Schallgeschwindigkeit 35 in der Stoffprobe 25 möglich. Die Auswertungseinheit 40 ist ferner mit einer Anzeigeeinheit 38 verbunden, über die die Schallgeschwindigkeit 35 ausgebbar ist. Gleichermaßen ist die Auswertungseinheit 40 mit einer Datenschnittstelle 49 gekoppelt, über die alternativ oder ergänzend die ermittelte Schallgeschwindigkeit 35 in der Stoffprobe 25 ausgebbar ist, beispielsweise an eine nicht dargestellte übergeordnete Steuereinheit.

Im beanspruchten Verfahren 100 zum Messen der Schallgeschwindigkeit 35 wird in einem ersten Schritt 110 die stehende Welle 30 in der Stoffprobe 25 erzeugt. Hierzu wird der Schallemitter 18 in geeigneter Weise angesteuert. Die Wellenbäuche 33 der stehenden Welle 30 entsprechen damit jeweils einer Druckoszillation, die über die Mikrofone 20 erfasst werden. Durch die Anordnung der Mikrofone 20 sind diese dazu eingerichtet, jeweils eine Druckoszillation, also eine Änderung des Schalldrucks 31 an der stehenden Welle 30, zu erfassen. Die so erfassten Druckoszillationen werden im ersten Schritt 110 durch die Mikrofone 20 jeweils als Messsignale 36 ausgegeben. Weiter werden die Messsignale 36 in einem zweiten Schritt 120 addiert und so ein Kombinationssignal 38 gebildet. Das Addieren 42 erfolgt durch eine Schaltung 44, die die Mikrofone 20 miteinander verbindet. Ebenso wird im zweiten Schritt 120 das Kombinationssignal 38 durch die Auswertungseinheit 40 ausgewertet. Basierend auf dem Kombinationssignal 38 wird die Schallgeschwindigkeit 35 in der Stoffprobe 25 ermittelt. Die Schallgeschwindigkeit 35 der Stoffprobe 25 hängt unter anderem von ihrer Zusammensetzung 13 ab. Die Frequenz 32 der stehenden Welle 30 wiederum hängt von der Schallgeschwindigkeit 35 ab. Infolgedessen ist die Schallgeschwindigkeit 35 anhand der Frequenz des Kombinationssignals 38 ermittelbar. Dies erfolgt unter Einsatz des Temperatursensors 26 und des Drucksensors 38 temperatur- bzw. druckkompensiert. Ferner gehört ein dritter Schritt 130 zum Verfahren 100, in dem die ermittelte Schallgeschwindigkeit 35 über die Anzeigeeinheit 47 an einen Benutzer ausgegeben wird und/oder über eine Datenschnittstelle 49 ausgegeben wird.

Das Verhalten der stehenden Welle 30 ist mit reduziertem Rechenaufwand simulierbar. Für eine präzise Simulation der Messvorrichtung 10 ist ein Simulieren von Störeinflüssen, die auf die Mikrofone 20 einwirken, im Wesentlichen vernachlässigbar. Die Messvorrichtung 10 und ihr Betriebsverhalten werden durch ein Simulationsprogrammprodukt 60 abgebildet, das als Digitaler Zwilling der Messvorrichtung 10 ausgebildet ist.

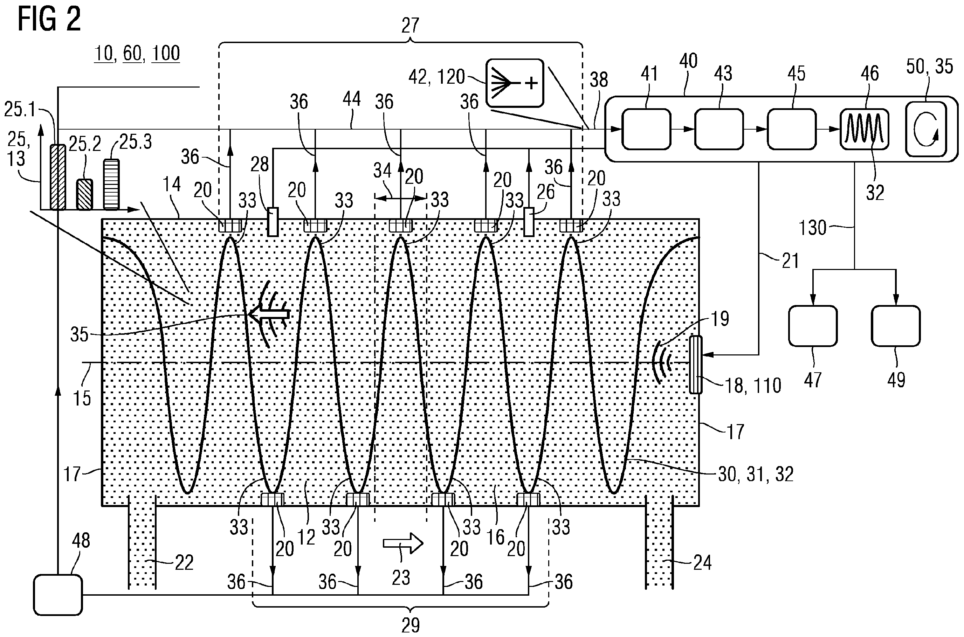

In FIG 2 ist schematisch eine zweite Ausführungsform der beanspruchten Messvorrichtung 10 in einem Längsschnitt dargestellt, mit der eine Ausführungsform des beanspruchten Verfahren 100 zum Messen einer Schallgeschwindigkeit 35 durchgeführt wird. Die Messvorrichtung 10 umfasst eine Messkammer 12, die durch eine Wandung 14 begrenzt ist und dessen Innenraum 16 eine Stoffprobe 25 aufgenommen ist. Die Messkammer 12 erstreckt sich im Wesentlichen entlang einer Hauptachse 15 und ist durch gegenüberliegende Stirnflächen 17 verschlossen. Die Stoffprobe 25 ist ein Gasgemisch, das eine erste Komponente 25.1, eine zweite Komponente 25.2 und eine dritte Komponente 25.3 umfasst. Die Zusammensetzung 13 der Stoffprobe 25 ist in FIG 2 in einem Diagramm versinnbildlicht. Die Messkammer 12 umfasst weiter eine Zufuhrleitung 22 und eine Abfuhrleitung 24, so dass die Stoffprobe 25 die Messkammer 12 in einem Messbetrieb durchströmen kann. Dies ist in FIG 2 als Strömungsrichtung 23 gezeigt. An einer Stirnfläche 17 der Messkammer 12 ist ein Schallemitter 18 angeordnet, der dazu ausgebildet ist, eine vorgebbare Schallanregung 19 in der Stoffprobe 25 hervorzurufen. Der Schallemitter 21 ist durch Steuerbefehle 21 von einer Auswertungseinheit 40 ansteuerbar, so dass die Schallanregung 19 eine vorgebbare Frequenz aufweist. In Abhängigkeit von der Zusammensetzung 13 der Stoffprobe 25 stellt sich darin die zu messende Schallgeschwindigkeit 35 ein.

An einer Wandung 14 der Messkammer 12 ist eine Mehrzahl an Mikrofonen 20 angeordnet, die im Wesentlichen parallel zur Hauptachse 15 angeordnet sind und eine erste Gruppe 27 bilden. Zumindest eines der Mikrofone 20 ist als Druckmikrofon ausgebildet. Des Weiteren ist eines der Mikrofone 20 entlang der Hauptachse 15 im Wesentlichen mittig angeordnet. Die Mikrofone 20 sind untereinander im Wesentlichen gleich beabstandet positioniert. Die Mikrofone 20 sind jeweils in einem Bereich 34 angeordnet, in dem bei einer entsprechenden Schallanregung 19 ein Wellenbauch 33 einer stehenden Welle 30 auftritt. Ferner ist der ersten Gruppe 27 gegenüberliegend eine zweite Gruppe 29 an Mikrofonen 20 an der Wandung 14 der Messkammer 12 angeordnet. Die in FIG 2 gezeigte stehende Welle 30 entspricht einem Schalldruck 31, der sich infolge einer Longitudinalschwingung in der Messkammer einstellt. Weiter weist die stehende Welle 30 eine Frequenz 32 auf, über die die Schallgeschwindigkeit 35 in der Stoffprobe 25 zu messen ist. Durch die Anordnung der Mikrofone 20 ist gewährleistet, dass sie jeweils ein Messignal 36 mit erhöhter Amplitude erfassen. Die Mikrofone 20 sind über eine Schaltung 44 miteinander verbunden, die dazu ausgebildet ist, die Messsignale 36 von den Mikrofonen 20 zu addieren. Die Mikrofone 20 der zweiten Gruppe 20 sind mit einem Inverter 48 verbunden, der dazu ausgebildet ist, die Vorzeichen der dort erfassten Wellenbäuche 33 umzukehren. Dementsprechend werden die Messsignale 36 der Mikrofone 20 der ersten Gruppe 27 und die Invertierungen der Messsignale 36 von den Mikrofonen 20 der zweiten Gruppe 29 addiert. Durch die Addition 42 der entsprechenden Messsignale 36 wird ein Kombinationssignal 38 gebildet, das eine entsprechend erhöhte Amplitude aufweist, wobei das Kombinationssignal 38 als Summensignal ausgebildet sein kann. Hierdurch weist das Kombinationssignal 38 ein erhöhtes Signal-Rauschen-Verhältnis, auch SNR genannt, auf. Die Auswertungseinheit 40 der Messvorrichtung 10 ist derart mit den Mikrofonen 20 verbunden, dass das Kombinationssignal 38 zugeführt wird.

Die Auswertungseinheit 40 umfasst einen Operationsverstärker 41, der dazu ausgebildet ist, das Kombinationssignal 38 zu verstärken und einem Phasenschieber 43 zuführt. Der Phasenschieber 43 wiederum ist dazu ausgebildet, eine Mitkopplung durchzuführen. Weiter ist der Phasenschieber 43 mit einer Amplitudenregelung 45 verbunden, wodurch die Amplitude des Kombinationssignals 38, das den Operationsverstärker 41 und den Phasenschieber 43 durchlaufen hat, für eine weitere Verarbeitung mit einem Zähler 46 angepasst wird. Der Zähler 46 ist mit einem nicht näher gezeigten Taktgeber, beispielsweise einer Uhr, gekoppelt und dazu ausgebildet, eine Frequenz des Kombinationssignals 38 zu erfassen. Die über den Zähler 46 erfasst Frequenz entspricht hierbei der Frequenz 32 der stehenden Welle 30 in der Messkammer 12. Weiter ist die Auswertungseinheit 40 mit einem Computerprogrammprodukt 50 versehen, das dazu geeignet ist, anhand der vom Zähler 46 erfassten Frequenz 32 die in der Stoffprobe 25 vorliegende Schallgeschwindigkeit 35 zu ermitteln.

Hierzu ist die Messkammer 12 ferner mit einem Temperatursensor 26 und einem Drucksensor 28 versehen, die mit der Auswertungseinheit 40 verbunden sind und die dazu ausgebildet und angeordnet sind, die in der Stoffprobe 25 vorliegende Temperatur und den Druck zu erfassen. Diese werden in Form von Messsignalen 36 ebenfalls an die Auswertungseinheit 40 übertragen. Basierend auf der Frequenz 32 ist somit eine temperatur- und druckkompensierte Ermittlung der Schallgeschwindigkeit 35 in der Stoffprobe 25 möglich. Die Auswertungseinheit 40 ist ferner mit einer Anzeigeeinheit 38 verbunden, über die die Schallgeschwindigkeit 35 ausgebbar ist. Gleichermaßen ist die Auswertungseinheit 40 mit einer Datenschnittstelle 49 gekoppelt, über die alternativ oder ergänzend die ermittelte Schallgeschwindigkeit 35 in der Stoffprobe 25 ausgebbar ist, beispielsweise an eine nicht dargestellte übergeordnete Steuereinheit.

Im beanspruchten Verfahren 100 zum Messen der Schallgeschwindigkeit 35 wird in einem ersten Schritt 110 die stehende Welle 30 in der Stoffprobe 25 erzeugt. Hierzu wird der Schallemitter 18 in geeigneter Weise angesteuert. Die Wellenbäuche 33 der stehenden Welle 30 entsprechen damit jeweils einer Druckoszillation, die über die Mikrofone 20 erfasst werden. Durch die Anordnung der Mikrofone 20 sind diese dazu eingerichtet, jeweils eine Druckoszillation, also eine Änderung des Schalldrucks 31 an der stehenden Welle 30, zu erfassen. Die so erfassten Druckoszillationen werden im ersten Schritt 110 durch die Mikrofone 20 jeweils als Messsignale 36 ausgegeben. Weiter werden die Messsignale 36 in einem zweiten Schritt 120 addiert und so ein Kombinationssignal 38 gebildet. Das Addieren 42 erfolgt durch eine Schaltung 44, die die Mikrofone 20 miteinander verbindet. Ebenso wird im zweiten Schritt 120 das Kombinationssignal 38 durch die Auswertungseinheit 40 ausgewertet. Basierend auf dem Kombinationssignal 38 wird die Schallgeschwindigkeit 35 in der Stoffprobe 25 ermittelt. Die Schallgeschwindigkeit 35 der Stoffprobe 25 hängt unter anderem von ihrer Zusammensetzung 13 ab. Die Frequenz 32 der stehenden Welle 30 wiederum hängt von der Schallgeschwindigkeit 35 ab. Infolgedessen ist die Schallgeschwindigkeit 35 anhand der Frequenz des Kombinationssignals 38 ermittelbar. Dies erfolgt unter Einsatz des Temperatursensors 26 und des Drucksensors 38 temperatur- bzw. druckkompensiert. Ferner gehört ein dritter Schritt 130 zum Verfahren 100, in dem die ermittelte Schallgeschwindigkeit 35 über die Anzeigeeinheit 47 an einen Benutzer ausgegeben wird und/oder über eine Datenschnittstelle 49 ausgegeben wird.

Das Verhalten der stehenden Welle 30 ist mit reduziertem Rechenaufwand simulierbar. Für eine präzise Simulation der Messvorrichtung 10 ist ein Simulieren von Störeinflüssen, die auf die Mikrofone 20 einwirken, im Wesentlichen vernachlässigbar. Die Messvorrichtung 10 und ihr Betriebsverhalten werden durch ein Simulationsprogrammprodukt 60 abgebildet, das als Digitaler Zwilling der Messvorrichtung 10 ausgebildet ist.

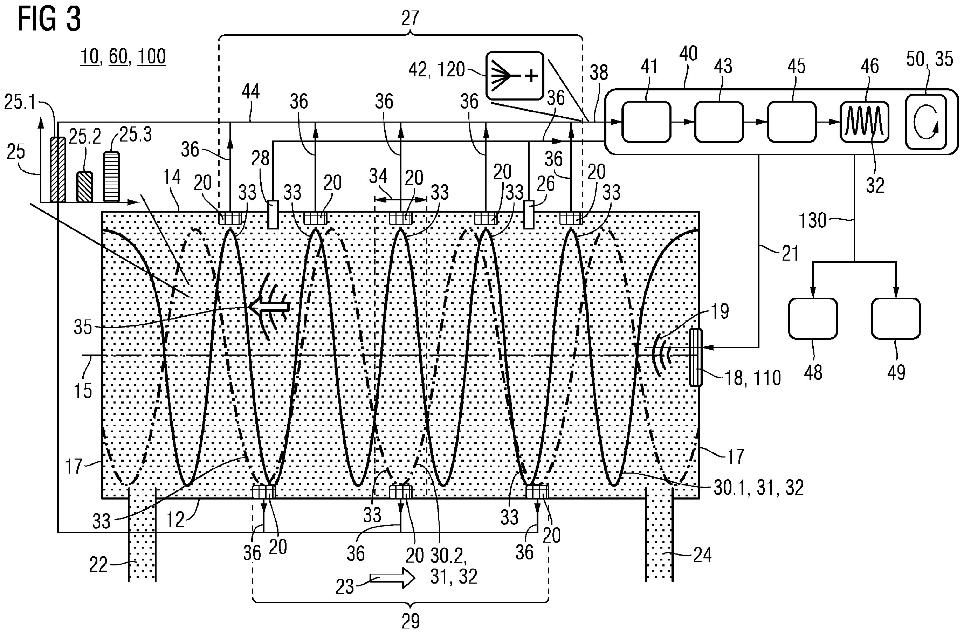

Eine dritte Ausführungsform der beanspruchten Messvorrichtung 20 ist in FIG 3 in einem Längsschnitt schematisch dargestellt, auf der eine Ausführungsform des beanspruchten Verfahrens 100 zum Messen einer Schallgeschwindigkeit 35 durchgeführt wird. Die Messvorrichtung 10 umfasst eine Messkammer 12, die durch eine Wandung 14 begrenzt ist und dessen Innenraum 16 eine Stoffprobe 25 aufgenommen ist. Die Messkammer 12 erstreckt sich im Wesentlichen entlang einer Hauptachse 15 und ist durch gegenüberliegende Stirnflächen 17 verschlossen. Die Stoffprobe 25 ist ein Gasgemisch, das eine erste Komponente 25.1, eine zweite Komponente 25.2 und eine dritte Komponente 25.3 umfasst. Die Zusammensetzung 13 der Stoffprobe 25 ist in FIG 3 in einem Diagramm versinnbildlicht. Die Messkammer 12 umfasst weiter eine Zufuhrleitung 22 und eine Abfuhrleitung 24, so dass die Stoffprobe 25 die Messkammer 12 in einem Messbetrieb durchströmen kann. Dies ist in FIG 3 als Strömungsrichtung 23 gezeigt. An einer Stirnfläche 17 der Messkammer 12 ist ein Schallemitter 18 angeordnet, der dazu ausgebildet ist, eine vorgebbare Schallanregung 19 in der Stoffprobe 25 hervorzurufen. Der Schallemitter 21 ist durch Steuerbefehle 21 von einer Auswertungseinheit 40 ansteuerbar, so dass die Schallanregung 19 eine vorgebbare Frequenz aufweist. In Abhängigkeit von der Zusammensetzung 13 der Stoffprobe 25 stellt sich darin die zu messende Schallgeschwindigkeit 35 ein.

An einer Wandung 14 der Messkammer 12 ist eine Mehrzahl an Mikrofonen 20 angeordnet, die im Wesentlichen parallel zur Hauptachse 15 angeordnet sind und eine erste Gruppe 27 bilden. Weiter ist eine Mehrzahl an Mikrofonen 20 an der Wandung 14 der Messkammer 12 angeordnet, die eine zweite Gruppe 29 bilden. Zumindest eines der Mikrofone 20 ist als Druckmikrofon ausgebildet. Des Weiteren ist je eines der Mikrofone 20 der ersten und zweiten Gruppe 27, 29 entlang der Hauptachse 15 im Wesentlichen mittig angeordnet. Die Mikrofone 20 sind untereinander im Wesentlichen gleich beabstandet positioniert. Die Mikrofone 20 der ersten und zweiten Gruppe 27, 29 sind jeweils in einem Bereich 34 angeordnet, in dem bei einer entsprechenden Schallanregung 19 ein Wellenbauch 33 einer stehenden Welle 30 auftritt. Die Mikrofone 20 der ersten Gruppe 27 sind dazu angeordnet, jeweils einen Wellenbauch 33, also eine Druckoszillation, an einer ersten stehenden Welle 30.1 zu erfassen. Die Abstände zwischen den Mikrofonen 20 der ersten Gruppe 27 sind durch die Frequenz 32 der ersten stehenden Welle 30.1 bestimmt. Korrespondierend sind die Mikrofone 20 der zweiten Gruppe 29 derart ausgebildet, Wellenbäuche 33 an einer zweiten stehenden Welle 30.2 zu erfassen. Die zweite stehende Welle 30.1 weist eine andere Frequenz 32 als die erste stehende Welle 30.1 auf.

Die in FIG 3 gezeigte erste und zweite stehende Welle 30.1, 30.2 entsprechen jeweils einem Schalldruck 31, der sich infolge von Longitudinalschwingungen in der Messkammer 12 einstellt. Die Frequenzen 32 der ersten und zweiten stehenden Welle 30.1, 30.2 stellen jeweils ein für die Schallgeschwindigkeit 35 in der Stoffprobe 25 dar, die zu messen ist. Durch die Anordnung der Mikrofone 20 in der ersten und zweiten Gruppe 27, 29 ist gewährleistet, dass sie jeweils ein Messignal 36 mit erhöhter Amplitude erfassen. Die Mikrofone 20 sind über eine Schaltung 44 miteinander verbunden, die dazu ausgebildet ist, die Messsignale 36 von den Mikrofonen 20 zu addieren. Die Messsignale 36 der Mikrofone 20 der ersten und zweiten Gruppe 27, 29 werden in FIG 3 addiert. Alternativ können die Messignale 36 auch gruppenweise addiert werden. Weiter alternativ kann auch zwischen einer Abtastung der ersten und zweiten Gruppe 27, 29 beispielsweise in einer Zeitscheibenansteuerung abgewechselt werden. Durch die Addition 42 der Messsignale 36 wird ein Kombinationssignal 38 gebildet, das eine entsprechend erhöhte Amplitude aufweist. Hierdurch weist das Kombinationssignal 38 ein erhöhtes Signal-Rauschen-Verhältnis, auch SNR genannt, auf. Die Auswertungseinheit 40 der Messvorrichtung 10 ist derart mit den Mikrofonen 20 verbunden, dass das Kombinationssignal 38 zugeführt wird. Die Signalanteile der ersten Gruppe 27 und der zweiten Gruppe 29 werden voneinander separiert bzw. sind durch die Zeitscheibenansteuerung der Mikrofone 20 in separaten Kombinationssignalen 38.

Die Auswertungseinheit 40 umfasst einen Operationsverstärker 41, der dazu ausgebildet ist, das Kombinationssignal 38 zu verstärken und einem Phasenschieber 43 zuführt. Der Phasenschieber 43 wiederum ist dazu ausgebildet, eine Mitkopplung durchzuführen. Weiter ist der Phasenschieber 43 mit einer Amplitudenregelung 45 verbunden, wodurch die Amplitude des Kombinationssignals 38, das den Operationsverstärker 41 und den Phasenschieber 43 durchlaufen hat, für eine weitere Verarbeitung mit einem Zähler 46 angepasst wird. Der Zähler 46 ist mit einem nicht näher gezeigten Taktgeber, beispielsweise einer Uhr, gekoppelt und dazu ausgebildet, eine Frequenz des Kombinationssignals 38 zu erfassen. Die über den Zähler 46 erfasst Frequenz entspricht hierbei der Frequenz 32 der stehenden Welle 30 in der Messkammer 12. Weiter ist die Auswertungseinheit 40 mit einem Computerprogrammprodukt 50 versehen, das dazu geeignet ist, anhand der vom Zähler 46 erfassten Frequenz 32 der ersten und/oder zweiten stehenden Welle 30.1, 30.2 die in der Stoffprobe 25 vorliegende Schallgeschwindigkeit 35 zu ermitteln.

Hierzu ist die Messkammer 12 ferner mit einem Temperatursensor 26 und einem Drucksensor 28 versehen, die mit der Auswertungseinheit 40 verbunden sind und die dazu ausgebildet und angeordnet sind, die in der Stoffprobe 25 vorliegende Temperatur und den Druck zu erfassen. Diese werden in Form von Messsignalen 36 ebenfalls an die Auswertungseinheit 40 übertragen. Basierend auf der Frequenz 32 der ersten und/oder zweiten stehenden Welle 30.1 30.2 ist somit eine temperatur- und druckkompensierte Ermittlung der Schallgeschwindigkeit 35 in der Stoffprobe 25 möglich. Die jeweils anhand der ersten bzw. zweiten stehenden Welle 30.1, 30.2 ermittelten Schallgeschwindigkeiten 35 werden zu einer gegenseitigen Plausibilisierung miteinander verglichen. Übersteigt eine Differenz zwischen der Schallgeschwindigkeit 35, die mittels der ersten stehenden Welle 30.1 ermittelt ist, und der Schallgeschwindigkeit 35, die mittels der zweiten stehenden Welle 30.2 ermittelt ist, betragsmäßig einen vorgebbaren Grenzwert, wird eine Warnung ausgegeben.

Die Auswertungseinheit 40 ist ferner mit einer Anzeigeeinheit 38 verbunden, über die die Schallgeschwindigkeit 35 in der Stoffprobe 25 ausgebbar ist. Gleichermaßen ist die Auswertungseinheit 40 mit einer Datenschnittstelle 49 gekoppelt, über die alternativ oder ergänzend die ermittelte Schallgeschwindigkeit 35 in der Stoffprobe 25 ausgebbar ist, beispielsweise an eine nicht dargestellte übergeordnete Steuereinheit.

Im beanspruchten Verfahren 100 zum Messen der Schallgeschwindigkeit 35 wird in einem ersten Schritt 110 die erste stehende Welle 30.1 in der Stoffprobe 25 erzeugt. Hierzu wird der Schallemitter 18 in geeigneter Weise angesteuert. Die Wellenbäuche 33 der ersten stehenden Welle 30.1 entsprechen damit jeweils einer Druckoszillation, die über die Mikrofone 20 erfasst werden. Durch die Anordnung der Mikrofone 20 sind diese dazu eingerichtet, jeweils eine Druckoszillation, also eine Änderung des Schalldrucks 31 an der ersten stehenden Welle 30.1, zu erfassen. Die so erfassten Druckoszillationen werden im ersten Schritt 110 durch die Mikrofone 20 der ersten Gruppe 27 jeweils als Messsignale 36 ausgegeben. Weiter werden die Messsignale 36 in einem zweiten Schritt 120 addiert und so ein Kombinationssignal 38 gebildet. Das Addieren 42 erfolgt durch eine Schaltung 44, die die Mikrofone 20 der ersten Gruppe 27 miteinander verbindet. Ebenso wird im zweiten Schritt 120 das Kombinationssignal 38 durch die Auswertungseinheit 40 ausgewertet. Basierend auf dem Kombinationssignal 38 wird die Schallgeschwindigkeit 35 in der Stoffprobe 25 ermittelt. Die Schallgeschwindigkeit 35 der Stoffprobe 25 hängt unter anderem von ihrer Zusammensetzung 13 ab. Die Frequenz 32 der ersten stehenden Welle 30.1 wiederum hängt von der Schallgeschwindigkeit 35 ab. Infolgedessen ist die Schallgeschwindigkeit 35 anhand der Frequenz des Kombinationssignals 38 ermittelbar. Dies erfolgt unter Einsatz des Temperatursensors 26 und des Drucksensors 38 temperatur- bzw. druckkompensiert.

Der erste und zweite Schritt 110, 120 werden korrespondierend auch für die zweite stehende Welle 30.2 durchgeführt, die ein andere Frequenz 32 aufweist als die erste stehende Welle 30.1. Die Druckoszillationen, also die Wellenbäuche 33, der zweiten stehenden Welle 30.2 werden mit den Mikrofonen 20 der zweiten Gruppe 29 erfasst.

Ferner gehört ein dritter Schritt 130 zum Verfahren 100, in dem die anhand der ersten und/oder zweiten stehenden Welle 30.1, 30.2 ermittelte Schallgeschwindigkeit 35 über die Anzeigeeinheit 47 an einen Benutzer ausgegeben wird und/oder über eine Datenschnittstelle 49 ausgegeben wird. Die Schallgeschwindigkeiten 35, die basierend auf der ersten stehenden Welle 30.1 und der zweiten stehenden Welle 30.2 ermittelt werden, werden ferner zu einer gegenseitigen Plausibilisierung miteinander verglichen. Wenn die Differenz zwischen den beiden Schallgeschwindigkeiten 35 einen vorgebbaren Grenzwert betragsmäßig überschreitet, wird eine Warnung ausgegeben.

Das Verhalten der ersten und zweiten stehenden Welle 30.1, 30.2 ist jeweils mit reduziertem Rechenaufwand simulierbar. Für eine präzise Simulation der Messvorrichtung 10 ist ein Simulieren von Störeinflüssen, die auf die Mikrofone 20 einwirken, im Wesentlichen vernachlässigbar. Die Messvorrichtung 10 und ihr Betriebsverhalten werden durch ein Simulationsprogrammprodukt 60 abgebildet, das als Digitaler Zwilling der Messvorrichtung 10 ausgebildet ist.

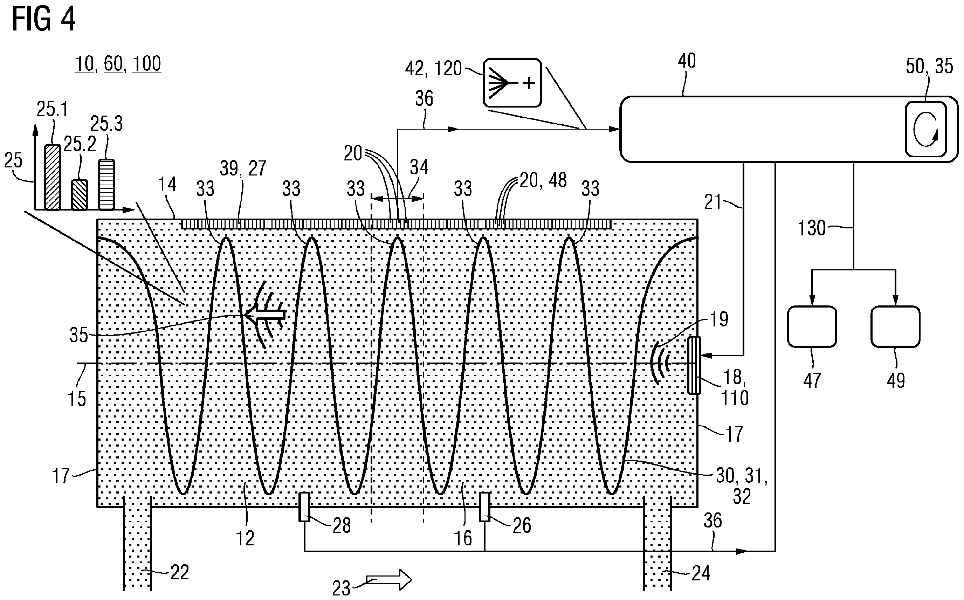

In FIG 4 ist schematisch eine dritte Ausführungsform der beanspruchten Messvorrichtung 10 in einem Längsschnitt dargestellt, mit der eine Ausführungsform des beanspruchten Verfahren 100 zum Messen einer Schallgeschwindigkeit 35 durchgeführt wird. Die Messvorrichtung 10 umfasst eine Messkammer 12, die durch eine Wandung 14 begrenzt ist und dessen Innenraum 16 eine Stoffprobe 25 aufgenommen ist. Die Messkammer 12 erstreckt sich im Wesentlichen entlang einer Hauptachse 15 und ist durch gegenüberliegende Stirnflächen 17 verschlossen. Die Stoffprobe 25 ist ein Gasgemisch, das eine erste Komponente 25.1, eine zweite Komponente 25.2 und eine dritte Komponente 25.3 umfasst. Die Zusammensetzung 13 der Stoffprobe 25 ist in FIG 4 in einem Diagramm versinnbildlicht. Die Messkammer 12 umfasst weiter eine Zufuhrleitung 22 und eine Abfuhrleitung 24, so dass die Stoffprobe 25 die Messkammer 12 in einem Messbetrieb durchströmen kann. Dies ist in FIG 4 als Strömungsrichtung 23 gezeigt. An einer Stirnfläche 17 der Messkammer 12 ist ein Schallemitter 18 angeordnet, der dazu ausgebildet ist, eine vorgebbare Schallanregung 19 in der Stoffprobe 25 hervorzurufen. Der Schallemitter 21 ist durch Steuerbefehle 21 von einer Auswertungseinheit 40 ansteuerbar, so dass die Schallanregung 19 eine vorgebbare Frequenz aufweist. In Abhängigkeit von der Zusammensetzung 13 der Stoffprobe 25 stellt sich darin die zu messende Schallgeschwindigkeit 35 ein.

An einer Wandung 14 der Messkammer 12 ist eine Schallkamera 39 angeordnet, die zellenweise auslesbar ist. Die Zellen 37 der Schallkamera 39 entsprechen in ihrer Funktionsweise einzelnen Mikrofonen 20, die auch zu Gruppen zusammengeschaltet, also gruppenweise, auslesbar sind. Die Zellen 37 der Schallkamera 39 sind derart angesteuert, dass diese im Bereich 34 von Wellenbäuchen 33 der stehenden Welle 30 Schalldruck 31, also Druckoszillationen, erfassen, und diese zu einem Kombinationssignal 38 addieren. Die Positionen parallel zur Hauptachse 15, an der Wellenbäuche 33, also Druckoszillationen, erfasst werden, sind durch entsprechende Ansteuerung der Schallkamera 39 auswählbar. Die Schallkamera 39 ist folglich dazu geeignet, eine Vielzahl an unterschiedlichen stehenden Wellen 30 in der Messkammer 12 zu erfassen. Das Addieren 42 der Messsignale 36 kann bei der Schallkamera 39 mittels des Computerprogrammprodukt 50 erfolgen. Bei Verwendung einer Schallkamera 39, deren Zellen 37 als Mikrofone 20 dienen, ist die Möglichkeit zur Erfassung und Auswertung stehender Wellen 30 in der Messkammer 12 lediglich durch die Dynamik des Schallemitters 18 begrenzt. Mittels des Computerprogrammprodukts 50 ist weiter auswertbar, welche Frequenz 32 die stehende Welle 30 aufweist, die in der Messkammer 12 vorliegt. Weiter ist das Computerprogrammprodukt 50 auf der Auswertungseinheit 40 dazu geeignet, anhand der Frequenz 32 die in der Stoffprobe 25 vorliegende Schallgeschwindigkeit 35 zu ermitteln.

Hierzu ist die Messkammer 12 ferner mit einem Temperatursensor 26 und einem Drucksensor 28 versehen, die mit der Auswertungseinheit 40 verbunden sind und die dazu ausgebildet und angeordnet sind, die in der Stoffprobe 25 vorliegende Temperatur und den Druck zu erfassen. Diese werden in Form von Messsignalen 36 ebenfalls an die Auswertungseinheit 40 übertragen. Basierend auf der Frequenz 32 ist somit eine temperatur- und druckkompensierte Ermittlung der Schallgeschwindigkeit 35 in der Stoffprobe 25 möglich. Die Auswertungseinheit 40 ist ferner mit einer Anzeigeeinheit 38 verbunden, über die die Schallgeschwindigkeit 35 ausgebbar ist. Gleichermaßen ist die Auswertungseinheit 40 mit einer Datenschnittstelle 49 gekoppelt, über die alternativ oder ergänzend die ermittelte Schallgeschwindigkeit 35 in der Stoffprobe 25 ausgebbar ist, beispielsweise an eine nicht dargestellte übergeordnete Steuereinheit.

Im beanspruchten Verfahren 100 zum Messen der Schallgeschwindigkeit 35 wird in einem ersten Schritt 110 die stehende Welle 30 in der Stoffprobe 25 erzeugt. Hierzu wird der Schallemitter 18 in geeigneter Weise angesteuert. Die Wellenbäuche 33 der stehenden Welle 30 entsprechen damit jeweils einer Druckoszillation, die über die Zellen 37 der Schallkamera 39, die als Mikrofone 20 dienen, erfasst werden. Es werden vorgebbare Zellen 37 erfasst, an denen Druckoszillationen, also Änderungen des Schalldrucks 31, vorliegen. Zellen 37, an denen keine Druckoszillationen oder schwache Druckoszillationen vorliegen, werden nicht erfasst, also ignoriert. Die so erfassten Druckoszillationen werden im ersten Schritt 110 durch die Schallkamera 39 jeweils als Messsignale 36 ausgegeben. Weiter werden die Messsignale 36 in einem zweiten Schritt 120 addiert und so ein Kombinationssignal 38 gebildet. Das Addieren 42 erfolgt durch das Computerprogrammprodukt 50 auf der Auswertungseinheit 40. Ebenso wird im zweiten Schritt 120 das Kombinationssignal 38 durch die Auswertungseinheit 40 ausgewertet. Basierend auf dem Kombinationssignal 38 wird die Schallgeschwindigkeit 35 in der Stoffprobe 25 ermittelt. Die Schallgeschwindigkeit 35 der Stoffprobe 25 hängt unter anderem von ihrer Zusammensetzung 13 ab. Die Frequenz 32 der stehenden Welle 30 wiederum hängt von der Schallgeschwindigkeit 35 ab. Infolgedessen ist die Schallgeschwindigkeit 35 anhand der Frequenz des Kombinationssignals 38 ermittelbar. Dies erfolgt unter Einsatz des Temperatursensors 26 und des Drucksensors 38 temperatur- bzw. druckkompensiert. Ferner gehört ein dritter Schritt 130 zum Verfahren 100, in dem die ermittelte Schallgeschwindigkeit 35 über die Anzeigeeinheit 47 an einen Benutzer ausgegeben wird und/oder über eine Datenschnittstelle 49 ausgegeben wird.

Das Verhalten der stehenden Welle 30 ist mit reduziertem Rechenaufwand simulierbar. Für eine präzise Simulation der Messvorrichtung 10 ist ein Simulieren von Störeinflüssen, die auf die Zellen 37 der Schallkamera 39 einwirken, im Wesentlichen vernachlässigbar. Die Messvorrichtung 10 und ihr Betriebsverhalten werden durch ein Simulationsprogrammprodukt 60 abgebildet, das als Digitaler Zwilling der Messvorrichtung 10 ausgebildet ist.

## Patentansprüche

1. Messvorrichtung (10) zum Erfassen einer Schallgeschwindigkeit (35) in einer Stoffprobe (25), umfassend eine Messkammer (12) mit einem Schallemitter (18), **dadurch gekennzeichnet, dass** parallel zu einer Hauptachse (15) der Messkammer (12) zueinander beabstandet eine Mehrzahl an Mikrofonen (20) zu einem selektiven Erfassen einer Frequenz (32) einer stehenden Welle (30) angeordnet ist.

2. Messvorrichtung (10) nach Anspruch 1, **dadurch gekennzeichnet, dass** zumindest eines der Mikrofone (20) und der Schallemitter in einem positiven Rückkopplungskreis angeordnet sind.

3. Messvorrichtung (10) nach Anspruch 1 oder 2, **dadurch gekennzeichnet, dass** eine Mehrzahl an Mikrofonen (20) mit der Auswertungseinheit (40) verbunden ist, die dazu ausgebildet ist, eine Addition (42) von Messsignalen (36) der Mikrofone (20) auszuwerten.

4. Messvorrichtung (10) nach einem der Ansprüche 1 bis 3, **dadurch gekennzeichnet, dass** die Auswertungseinheit (40) einen Operationsverstärker (41) aufweist, dem die Messsignale (36) der Mikrofone (20) an einem Verstärkereingang kombiniert zu geführt werden.

5. Messvorrichtung (10) nach einem der Ansprüche 1 bis 4, **dadurch gekennzeichnet, dass** die Mikrofone (20) zu einem kombinierten Erfassen von Druckbäuchen (33) parallel zur Hauptachse (15) der Messkammer (12) angeordnet sind.

6. Messvorrichtung (10) nach einem der Ansprüche 1 bis 5, **dadurch gekennzeichnet, dass** eine erste Gruppe (27) an Mikrofonen (20) zu einem selektiven Erfassen einer Frequenz (32) einer ersten stehenden Welle (30.1) und eine zweite Gruppe (29) an Mikrofonen (20) zu einem selektiven Erfassen einer Frequenz (32) einer zweiten stehenden Welle (30.2) an der Messkammer (12) angeordnet ist.

7. Messvorrichtung (10) nach einem der Ansprüche 2 bis 6, **dadurch gekennzeichnet, dass** die Auswertungseinheit (40) frei von einem Bandpassfilter ausgebildet ist.

8. Messvorrichtung (10) nach einem der Ansprüche 1 bis 7, **dadurch gekennzeichnet, dass** die Mikrofone (20) bezogen auf die Hauptachse (15) der Messkammer (12) an der gleichen Umfangsposition angeordnet sind.

9. Messvorrichtung (10) nach einem der Ansprüche 1 bis 8, **dadurch gekennzeichnet, dass** die stehende Welle (30) einer dritten oder vierten harmonischen Longitudinalschwingung in der Messkammer (12) entspricht.

10. Messvorrichtung (10) nach einem der Ansprüche 1 bis 9, **dadurch gekennzeichnet, dass** im Bereich zumindest eines Mikrofons (20) ein Temperatursensor (26) und/oder ein Drucksensor (28) angeordnet ist.

11. Messvorrichtung (10) nach einem der Ansprüche 1 bis 9, **dadurch gekennzeichnet, dass** zumindest ein Mikrofon (20) als Druckmikrofon oder als Lasermikrofon ausgebildet ist, oder mehrere Mikrofone (20) kombiniert als Schallkamera (39) ausgebildet sind.

12. Verfahren (100) zum Messen einer Schallgeschwindigkeit (35) in einer Stoffprobe (25) in einer Messkammer (12) eine Messvorrichtung (10), umfassend die Schritte:
a) Erzeugen einer stehenden Welle (30) in der Stoffprobe (25); Erfassen einer Mehrzahl an Druckoszillationen und Ausgeben einer Mehrzahl an korrespondierenden Messsignalen (36) ;
b) Addieren der Messsignale (36) zu einem Kombinationssignal (38) und Ermitteln einer Frequenz (32) des Kombinationssignals (38), wobei ausgehend von der ermittelten Frequenz (32) des Kombinationssignals (38) die in der Stoffprobe (25) vorliegende Schallgeschwindigkeit (35) ermittelt wird;
c) Ausgeben der in Schritt b) ermittelten Schallgeschwindigkeit (35) in der Stoffprobe (25) an einen Benutzer und/oder eine Datenschnittstelle (49).

13. Verfahren (100) nach Anspruch 12, **dadurch gekennzeichnet, dass** die Messvorrichtung (20) nach einem der Ansprüche 1 bis 11 ausgebildet ist.

14. Computerprogrammprodukt (50), das zum Empfangen und Verarbeiten von Messsignalen (36) von einer Mehrzahl an Mikrofonen (20) ausgebildet ist, wobei das Computerprogrammprodukt (50) dazu ausgebildet ist, ein Verfahren (100) nach einem der Ansprüche 12 oder 13 durchzuführen.

15. Auswertungseinheit (40) zum Ermitteln einer Schallgeschwindigkeit (35) in eine Stoffprobe (25), die dazu geeignet ist, eine Frequenz (32) eines Kombinationssignal (38) zu ermitteln, **dadurch gekennzeichnet, dass** die Auswertungseinheit (40) eine Schaltung (44) umfasst, die zu einem Addieren von Messsignalen (36) von einer Mehrzahl an Mikrofonen (20) zum Kombinationssignal (38) ausgebildet ist.

16. Simulationsprogrammprodukt (60) zum Simulieren eines Betriebsverhaltens einer Messvorrichtung (20), das zu einem Durchführen der Schritte ausgebildet ist:
a) Bereitstellen eines Datensatzes, der dazu geeignet ist, die Funktionsweise der Messvorrichtung (20) nachzustellen;
b) Vorgeben zumindest eines Betriebsparameters, der das zu simulierende Betriebsverhalten charakterisiert;
c) Ausführen eines Physik-Moduls, das dazu ausgebildet ist, das Betriebsverhalten der Messvorrichtung (20) anhand des Datensatzes und des zumindest einen Betriebsparameters nachzustellen und einen Leistungsparameter der Messvorrichtung (20) zu ermitteln;
d) Ausgeben des zumindest einen Leistungsparameters an einen Benutzer und/oder eine Datenschnittstelle);
**dadurch gekennzeichnet, dass** die Messvorrichtung (20) nach einem der Ansprüche 1 bis 11 ausgebildet ist.
